# EUROPEAN PATENT SPECIFICATION

(11) **EP 4 258 645 B1**
(45) Date of publication and mention of the grant of the patent: **03.06.2026**
(21) Application number: 20964312.1
(22) Date of filing: 04.12.2020
(51) Int. Cl.: G06F 9/48, H04N 1/387, G06F 9/50, G06T 1/60, G06T 3/4038, H04N 23/698, H04N 23/951

(54) **CONTROL DEVICE, CONTROL METHOD, AND PROGRAM**
STEUERUNGSVORRICHTUNG, STEUERUNGSVERFAHREN UND PROGRAMM
DISPOSITIF DE COMMANDE, PROCÉDÉ DE COMMANDE ET PROGRAMME

(43) Date of publication of application: 11.10.2023
(73) Proprietor: NTT, Inc., Tokyo 100-8116 (JP)
(72) Inventor: HOSHIDE Takahide, Musashino-shi, Tokyo 180-8585 (JP); ONO Masato, Musashino-shi, Tokyo 180-8585 (JP); FUKATSU Shinji, Musashino-shi, Tokyo 180-8585 (JP)
(74) Representative: Hoffmann Eitle
(86) International application number: PCT/JP2020/045215
(87) International publication number: WO 2022/118460

(56) References cited:
- EP-B1- 2 473 920
- WO-A1-2013/021656
- JP-A- 2003 067 203
- JP-A- 2005 267 313
- JP-A- 2019 061 466
- US-A1- 2008 270 753
- US-A1- 2011 247 006
- US-A1- 2015 348 226

## Description

### Technical Field

The present invention relates to a control apparatus, a control method, and a program.

### Background Art

In recent years, image processing has become widespread for joining images captured by a plurality of cameras to reconfigure a wide image. A graphical processing unit (GPU) specialized in image processing is used for the image processing.

### Citation List

### Non Patent Literature

Non Patent Literature 1: "CUDA Toolkit Documentation", [online], NVIDIA Corporation, Internet <URL: https://docs.nvidia.com/cuda/cuda-runtime-api/>
Non Patent Literature 2: "Dot-assignment ... what is going on here?", [online], Julia Programming Language, Internet <URL: https://discourse.julialang.org/t/dot-assignment-what-is-going-on-here/2579>

### Patent Literature

Patent Literature 1: US 2015348226 A1 refers to selective GPO throttling, including managing a thermal profile of a device by selectively throttling graphics processing unit operations. The plurality of processes may include a high priority process and a low priority process. If a thermal profile of the device exceeds a thermal threshold, the device decreases a GPU utilisation for the low priority process and maintains a GPU utilisation for the high priority process.
Patent Literature 2: US 2008270753 A1 is concerned with image processing and composite image processing and improving performance by means of load monitoring and load balancing.

### Summary of Invention

### Technical Problem

In a case where live distribution of a wide image is performed, it is necessary to generate the wide image within a predetermined processing time. In programming using a GPU, a developer can set a priority of a task, but cannot externally control resource allocation of the GPU. For that reason, there has been a problem that it is difficult to ensure that processing is completed within a determined processing time in a case where tasks with uneven processing times are simultaneously and continuously executed.

The present invention has been made in view of the above, and an object thereof is to output a processing result within a predetermined processing time.

### Solution to Problem

the object of the invention is solved by the subject matter of the independent claims. Advantageous embodiments are disclosed in the dependent claim. A control apparatus of one example is a control apparatus that controls a processing device that executes different types of processing, the control apparatus including: a monitoring unit that monitors a buffer used by each of the different types of processing executed by the processing device in order to transfer a task and estimates a load on the processing device; and a change unit that changes a processing content of processing with a lower priority among the different types of processing executed by the processing device to processing with a smaller load in a case where the load on the processing device is larger than a first threshold.

### Advantageous Effects of Invention

According to the present invention, it is possible to output a processing result within a predetermined processing time.

### Brief Description of Drawings

Fig. 1 is a diagram illustrating an example of a configuration of a processing device of a present embodiment.
Fig. 2 is a diagram for explaining an example of processing executed by an image processing unit.
Fig. 3 is a flowchart for explaining an example of processing executed by a control unit.
Fig. 4 illustrates an example of a table in which a GPU load and a processing content are associated with each other.
Fig. 5 is a diagram illustrating an example of a hardware configuration of the control unit.

### Description of Embodiments

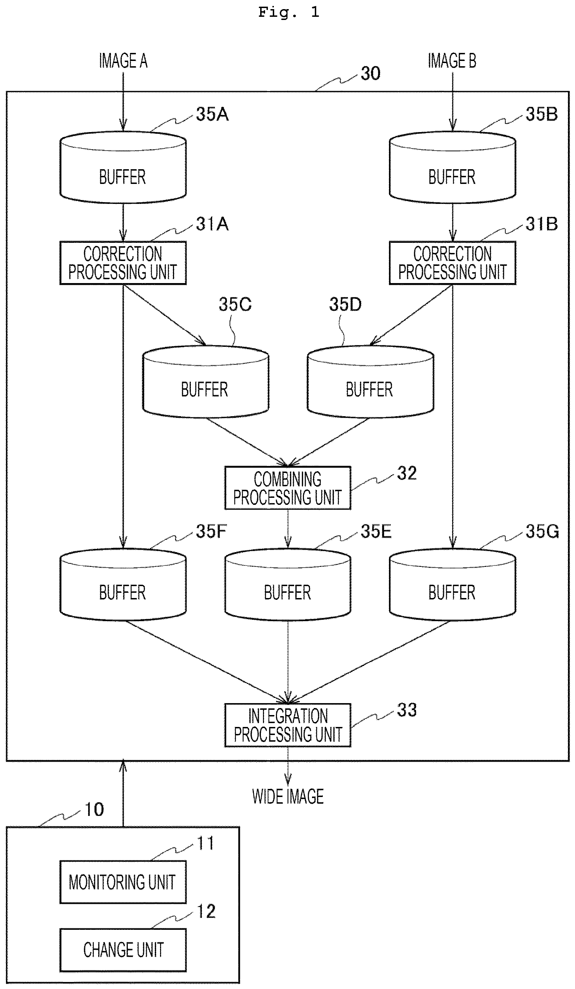

A configuration of a processing device of a present embodiment will be described with reference to Fig. 1. The processing device illustrated in Fig. 1 includes a control unit 10 and an image processing unit 30.

The image processing unit 30 includes correction processing units 31A and 31B, a combining processing unit 32, an integration processing unit 33, and buffers 35A to 35G, inputs a plurality of images A and B, connects the input images together, synthesizes one wide image, and outputs the synthesized one wide image. A program corresponding to a processing content is executed on a GPU to function as the correction processing units 31A and 31B, the combining processing unit 32, and the integration processing unit 33. Each of the correction processing unit 31A, the correction processing unit 31B, the combining processing unit 32, and the integration processing unit 33 corresponds to one process. The processing units transfer tasks via the buffers 35A to 35G.

The correction processing units 31A and 31B input the images A and B, and correct inclination, luminance, hue, and the like of the images A and B. The correction processing units 31A and 31B store data of overlapping areas overlapping between adjacent images in the buffers 35C and 35D, and store data of non-overlapping areas not overlapping between the adjacent images in the buffers 35F and 35G. The images A and B are 4K images captured by different cameras, for example. Data of the images A and B are temporarily held in the buffers 35A and 35B, respectively. The correction processing unit 31A reads the image A from the buffer 35A and processes the image A. The correction processing unit 31B reads the image B from the buffer 35B and processes the image B.

The combining processing unit 32 reads the overlapping areas of the adjacent images A and B from the respective buffers 35C and 35D, sets a seam for the overlapping areas, and combines the overlapping areas of the adjacent images A and B. The combining processing unit 32 stores a combined overlapping area in the buffer 35E. The seam is a joint connecting the images A and B, and it is possible to improve combining quality by setting the seam not to be noticeable according to the images of the overlapping areas.

The integration processing unit 33 reads the combined overlapping area from the buffer 35E, reads the non-overlapping areas of the images A and B from the buffers 35F and 35G, respectively, integrates the overlapping area and the two non-overlapping areas, and outputs a wide image.

Note that the image processing unit 30 may input three or more images. In that case, the image processing unit 30 includes a number of correction processing units depending on the number of images to be input and a number of combining processing units depending on the number of overlapping areas.

The control unit 10 includes a monitoring unit 11 and a change unit 12, estimates a GPU load on the image processing unit 30 by monitoring the buffers 35A to 35G of the image processing unit 30, and controls a processing content of each of the different types of processing executed by the image processing unit 30 according to the GPU load.

The monitoring unit 11 monitors the buffers 35A to 35G and estimates the GPU load on the image processing unit 30. If the amount of data held by the buffers 35A to 35G, that is, the amount of data waiting for being processed is large, the monitoring unit 11 estimates that the load on the image processing unit 30 is high. The monitoring unit 11 may estimate the load on the image processing unit 30 on the basis of the total amount of data held by all the buffers 35A to 35G, or may estimate the load on the image processing unit 30 on the basis of the amount of data held by a specific buffer (for example, buffers 35A, 35B, 35C, 35D, and 35E).

Note that if the GPU load can be estimated, the monitoring unit 11 may monitor another information.

The change unit 12 changes processing with a lower priority among the processing executed by the image processing unit 30 to that with a processing content with a lighter load according to the GPU load. For example, in a case where a priority of processing executed by the combining processing unit 32 is lower, the change unit 12 changes a processing content of the combining processing unit 32 to a lighter processing content.

When the GPU load is reduced, the change unit 12 may change processing executed by each processing unit to that with a processing content with a heavier load.

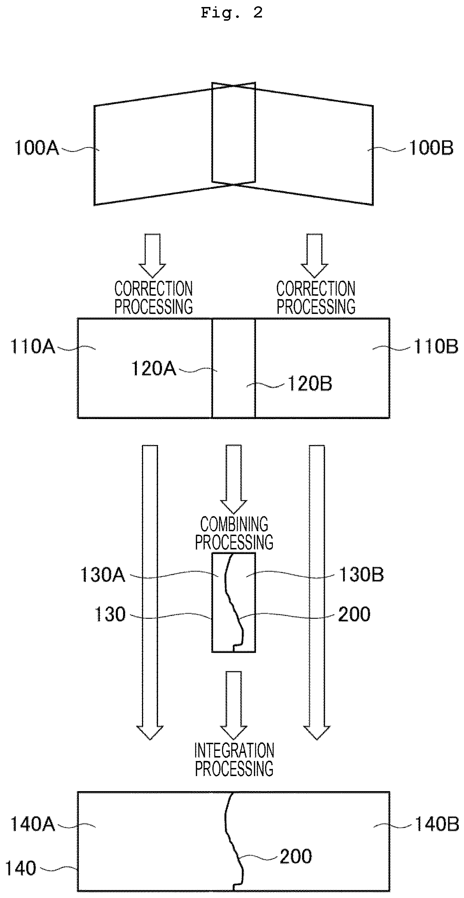

Next, a flow of processing executed by the image processing unit 30 will be described with reference to Fig. 2.

The correction processing unit 31A performs correction processing on an image 100A, transfers a non-overlapping area 110A of the image 100A to the integration processing unit 33, and transfers an overlapping area 120A to the combining processing unit 32. The non-overlapping area 110A is stored in the buffer 35F, and the overlapping area 120A is stored in the buffer 35C.

Similarly, the correction processing unit 31B performs correction processing on the image 100B, transfers a non-overlapping area 110B of the image 100B to the integration processing unit 33, and transfers an overlapping area 120B to the combining processing unit 32. The non-overlapping area 110B is stored in the buffer 35G, and the overlapping area 120B is stored in the buffer 35D.

Note that, in Fig. 2, the images 100A and 100B are arranged in the horizontal direction, but the present embodiment is not limited thereto. The images 100A and 100B may be arranged in the vertical direction, or four or more images may be arranged vertically and horizontally.

The combining processing unit 32 reads the overlapping areas 120A and 120B of the images 100A and 100B at the same timing from the buffers 35C and 35D, sets a seam 200 for the overlapping areas 120A and 120B, and transfers an overlapping area 130 obtained by combining areas 130A and 130B obtained by dividing the overlapping areas 120A and 120B by the seam 200 to the integration processing unit 33. The overlapping area 130 is stored in the buffer 35E.

The integration processing unit 33 reads the overlapping area 130 and the non-overlapping areas 110A and 110B at the same timing from the buffer 35C and the buffers 35F and 35G, integrates the overlapping area 130 and the non-overlapping areas 110A and 110B, and outputs a wide image 140. An area 140A on the left side from the seam 200 of the wide image 140 is an image of the image 100A, and an area 140B on the right side from the seam 200 is an image of the image 100B.

To perform live distribution of the wide image in which the plurality of images is connected together, it is necessary to continuously output the wide image 140 at intervals at which the images 100A and 100B are input. In a case where the load on the image processing unit 30 increases, the control unit 10 changes processing with a lower priority executed by a processing unit to that with a processing content with a lighter load.

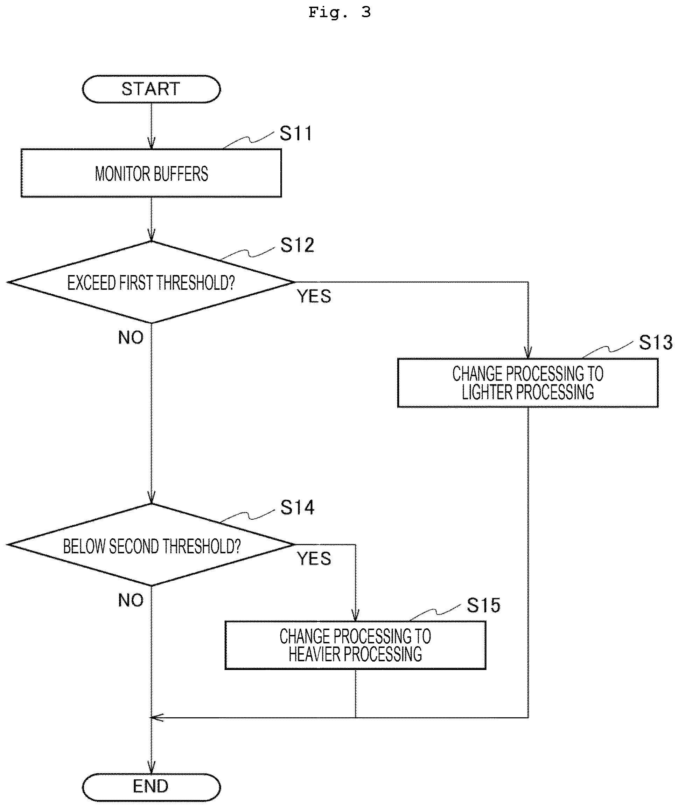

Next, a flow of processing executed by the control unit 10 will be described with reference to a flowchart of Fig. 3.

In step S11, the monitoring unit 11 monitors the buffers 35A to 35G and estimates the GPU load on the image processing unit 30. For example, the monitoring unit 11 monitors the buffers 35A to 35G at intervals of a frame rate of images to be processed.

In step S12, the monitoring unit 11 determines whether or not the GPU load exceeds a preset value (first threshold). If not, the processing proceeds to step S14. The monitoring unit 11 may advance the processing to step S13 in a case where a state in which the GPU load exceeds the first threshold continues for a predetermined time or more.

In a case where the GPU load exceeds the first threshold, in step S13, the change unit 12 changes processing with a lower priority executed by a processing unit to lighter processing.

In a case where the GPU load does not exceed the first threshold, in step S14, the monitoring unit 11 determines whether or not the GPU load is below a second threshold. The second threshold may be a threshold set lower than the first threshold.

In a case where the GPU load is lower than the second threshold, in step S15, the change unit 12 changes processing executed by a processing unit to heavier processing. The change unit 12 may change the processing executed by the processing unit whose processing is changed to lighter processing in step S13 to heavier processing, or may change processing with a higher priority executed by a processing unit to heavier processing.

Here, an example of changing a processing content will be described in terms of combining processing. Since the processing executed by the combining processing unit 32 affects only quality of a combined portion of the wide image, it is considered that the priority is lower than those of types of processing executed by the correction processing units 31A and 31B and the integration processing unit 33 that affect quality of the entire image. In addition, in the combining processing, combining quality and a processing load can be changed by changing three parameters of a blending method, a seam search frequency, and a seam search method at the time of combining. Increasing the processing load increases the combining quality, and decreasing the processing load decreases the combining quality.

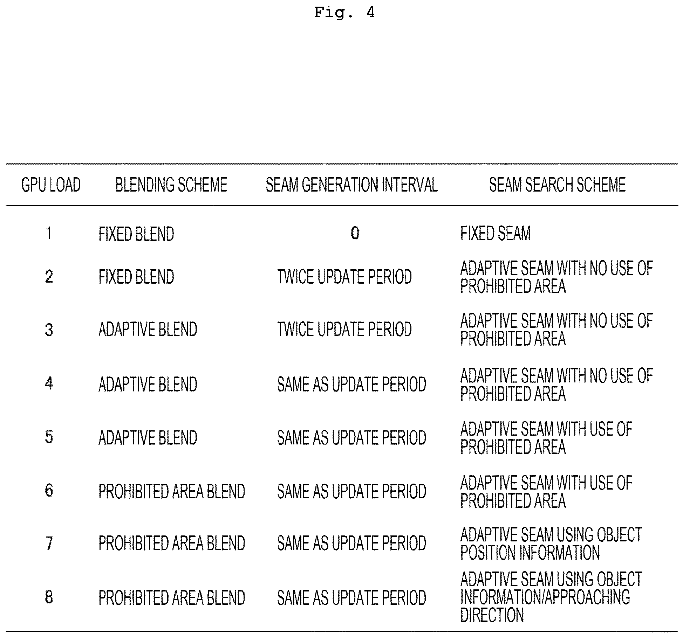

Fig. 4 illustrates an example of a table in which a GPU load and a processing content are associated with each other. In the table of Fig. 4, as a numerical value of the GPU load increases, processing has a larger load and becomes more elaborate. For example, in the seam search method, in a case where the seam is fixed, the GPU load is small, but an appropriate seam cannot be set according to the image, and thus the combining quality is deteriorated. When the seam is set according to the image of the overlapping area, or the seam is set while avoiding a prohibited area, or the seam is set using tracking information on an object detected from the image, the GPU load increases, but the combining quality can be improved.

When the control unit 10 detects that the GPU load exceeds the threshold while the combining processing unit 32 is operating with a processing content of the GPU load = 8 in the table of Fig. 4, the control unit 10 changes the processing of the combining processing unit 32 to that with a processing content of the GPU load = 7. The seam search schemes are different between 7 and 8 of the GPU load. The seam search scheme when the GPU load = 8 has a larger load than the seam search scheme when the GPU load = 7, but the combining quality is improved. The blending schemes are different between 5 and 6 of the GPU load in the table of Fig. 4. The seam generation intervals are different between 3 and 4 of the GPU load.

Note that the control unit 10 may change the processing contents of the correction processing units 31A and 31B according to the estimated GPU load. For example, in a case where a filter is applied in the correction processing, a type of the filter may be changed, or a resolution of the image may be lowered in the correction processing.

As described above, the control unit 10 of the present embodiment controls the image processing unit 30 that executes different types of processing. The control unit 10 includes: a monitoring unit 11 that monitors buffers 35A to 35G used by each of the different types of processing executed by the image processing unit 30 in order to transfer a task and estimates a load on the image processing unit 30; and a change unit that changes a processing content of processing with a lower priority among the different types of processing executed by the image processing unit 30 to processing with a smaller load in a case where the load on the image processing unit 30 is larger than a first threshold. As a result, in a case where the image processing unit 30 simultaneously and continuously executes a plurality of types of processing that is uneven, the control unit 10 controls the processing executed by the image processing unit 30 according to the load on the image processing unit 30, whereby the image processing unit 30 can output a processing result within a predetermined processing time.

According to the present embodiment, the monitoring unit 11 monitors the buffers 35A to 35G and estimates the load on the GPU that executes each of the different types of processing, whereby the GPU load can be estimated even in a case where it is difficult to directly acquire the load on the GPU. In addition, in a case where a plurality of GPUs uses one buffer, it is possible to estimate loads on the plurality of GPUs by monitoring the buffer.

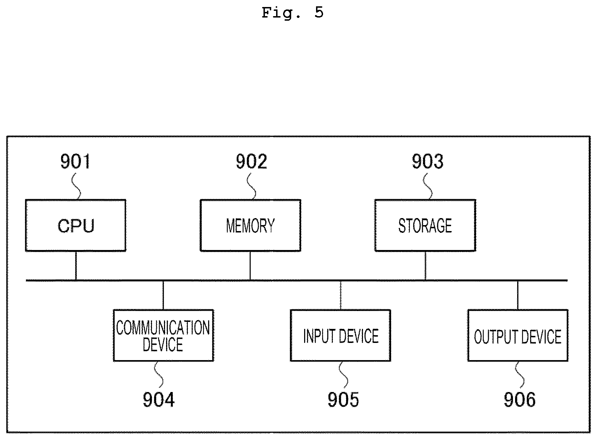

As the control unit 10 of the present embodiment described above, for example, a general-purpose computer system including a central processing unit (CPU) 901, a memory 902, a storage 903, a communication device 904, an input device 905, and an output device 906 can be used as illustrated in Fig. 5. In the computer system, the CPU 901 executes a predetermined program loaded on the memory 902, whereby the control unit 10 of the present embodiment is implemented. This program can be recorded on a computer-readable recording medium such as a magnetic disk, an optical disc, or a semiconductor memory, or can be distributed via a network.

### Reference Signs List

- 10: control unit
- 11: monitoring unit
- 12: change unit
- 30: image processing unit
- 31A, 31B: correction processing unit
- 32: combining processing unit
- 33: integration processing unit
- 35A-35G: buffer

## Claims

1. A system comprising a control apparatus (10) and an image processing device (30), wherein the control apparatus (10) monitors and controls the image processing device (30) adapted to execute different types of processing to connect a plurality of images together to synthesize a wide image,
the control apparatus comprising:
a monitoring unit (11) that monitors buffers (35A - 35G) used by each of the different types of processing executed by the image processing device (30), wherein the buffers are used in order to transfer a task between processing units device (31A, 31B, 32, 33) of the image processing device (30), for estimating a load on the image processing device (30); and
a change unit (12) that, in a case where the load on the image processing device is larger than a first threshold, changes a current processing content of a type of processing with a lower priority, among the different types of processing executed by the image processing device, to processing content with a smaller load, wherein the type of processing with lower priority is a combining of overlapping areas between the images and wherein the processing content with smaller load is a processing content for combining areas between the images with a decreased combining quality.

2. The system according to claim 1,
wherein
the change unit changes a processing content of the processing executed by the image processing device to processing with a larger load in a case where the load on the processing device is smaller than a second threshold.

3. The system according to claim 1 or 2,
wherein
the image processing device executes each of the different types of processing by using a GPU, and
the monitoring unit monitors the buffer and estimates a load on the GPU.

4. A control method for controlling an image processing device adapted to execute different types of processing to connect a plurality of images together to synthesize a wide image,
the control method comprising,
by a system comprising a control apparatus (10) and an image processing device (30),
monitoring buffers used by each of the different types of processing executed by the image processing device, wherein the buffers are used in order to transfer a task between processing units device of the image processing device (30), for estimating a load on the image processing device; and
changing, in a case where the load on the image processing device is larger than a first threshold, a current processing content of a type of processing with a lower priority among the different types of processing executed by the image processing device to processing content with a smaller load, wherein the type of processing with lower priority is a combining of overlapping areas between the images and wherein the processing content with smaller load is a processing content for combining areas between the images with a decreased combining quality .

5. A computer program comprising instructions which, when executed by a system comprising a control apparatus (10) and an image processing device (30), causes the system to carry out the method of claim 4.

## Patentansprüche

1. System, umfassend eine Steuerungseinrichtung (10) und eine Bildverarbeitungsvorrichtung (30), wobei die Steuerungseinrichtung (10) die Bildverarbeitungsvorrichtung (30) überwacht und steuert, die angepasst ist, verschiedene Verarbeitungsarten auszuführen, um eine Vielzahl von Bildern miteinander zu verbinden, um ein Panoramabild zu synthetisieren,
wobei die Steuerungseinrichtung Folgendes umfasst:
eine Überwachungseinheit (11), die Puffer (35A - 35G) überwacht, die von jeder der verschiedenen von der Bildverarbeitungsvorrichtung (30) ausgeführten Verarbeitungsarten verwendet werden, wobei die Puffer verwendet werden, um eine Aufgabe zwischen der Verarbeitungseinheitenvorrichtung (31A, 31B, 32, 33) der Bildverarbeitungsvorrichtung (30) zu übertragen, zum Schätzen einer Last auf der Bildverarbeitungsvorrichtung (30); und
eine Änderungseinheit (12), die, in einem Fall, in dem die Last auf der Bildverarbeitungsvorrichtung größer ist als ein erster Schwellenwert, einen aktuellen Verarbeitungsinhalt einer Verarbeitungsart mit einer niedrigeren Priorität, unter den verschiedenen von der Verarbeitungsvorrichtung ausgeführten Verarbeitungsarten, zu einem Verarbeitungsinhalt mit einer kleineren Last ändert, wobei die Verarbeitungsart mit niedrigerer Priorität ein Kombinieren von Überlappungsbereichen zwischen den Bildern ist und wobei der Verarbeitungsinhalt mit kleinerer Last ein Verarbeitungsinhalt zum Kombinieren von Bereichen zwischen den Bildern mit einer verringerten Kombinationsqualität ist.

2. System nach Anspruch 1,
wobei
die Änderungseinheit, in einem Fall, in dem die Last auf der Verarbeitungsvorrichtung kleiner ist als ein zweiter Schwellenwert, einen Verarbeitungsinhalt der von der Bildverarbeitungsvorrichtung ausgeführten Verarbeitung zu einer Verarbeitung mit einer größeren Last ändert.

3. System nach Anspruch 1 oder 2,
wobei
die Bildverarbeitungsvorrichtung jede der verschiedenen Verarbeitungsarten unter Verwendung einer GPU ausführt, und
die Überwachungseinheit den Puffer überwacht und eine Last auf der GPU schätzt.

4. Steuerungsverfahren zum Steuern einer Bildverarbeitungsvorrichtung, die angepasst ist, verschiedene Verarbeitungsarten auszuführen, um eine Vielzahl von Bildern miteinander zu verbinden, um ein Panoramabild zu synthetisieren,
wobei das Steuerungsverfahren umfasst,
durch ein System, das eine Steuerungseinrichtung (10) und eine Bildverarbeitungsvorrichtung (30) umfasst,
Überwachen von Puffern, die von jeder der verschiedenen von der Bildverarbeitungsvorrichtung) ausgeführten Verarbeitungsarten verwendet werden, wobei die Puffer verwendet werden, um eine Aufgabe zwischen der Verarbeitungseinheitenvorrichtung der Bildverarbeitungsvorrichtung (30) zu übertragen, zum Schätzen einer Last auf der Bildverarbeitungsvorrichtung;
und
Ändern, in einem Fall, in dem die Last auf der Bildverarbeitungsvorrichtung größer ist als ein erster Schwellenwert, eines aktuellen Verarbeitungsinhalts einer Verarbeitungsart mit einer niedrigeren Priorität unter den verschiedenen von der Bildverarbeitungsvorrichtung ausgeführten Verarbeitungsarten zu einem Verarbeitungsinhalt mit einer kleineren Last, wobei die Verarbeitungsart mit niedrigerer Priorität ein Kombinieren von Überlappungsbereichen zwischen den Bildern ist und wobei der Verarbeitungsinhalt mit kleinerer Last ein Verarbeitungsinhalt zum Kombinieren von Bereichen zwischen den Bildern mit einer verringerten Kombinationsqualität ist.

5. Computerprogramm, umfassend Anweisungen, die, wenn sie von einem einem System ausgeführt werden, das eine Steuerungseinrichtung (10) und eine Bildverarbeitungsvorrichtung (30) umfasst, das System veranlassen, das Verfahren nach Anspruch 4 durchzuführen.

## Revendications

1. Système comprenant un appareil de commande (10) et un dispositif de traitement d'image (30), dans lequel l'appareil de commande (10) surveille et commande le dispositif de traitement d'image (30) conçu pour exécuter différents types de traitement pour assembler une pluralité d'images entre elles pour synthétiser une image panoramique,
l'appareil de commande comprenant :
une unité de surveillance (11) qui surveille des tampons (35A - 35G) utilisés par chacun des différents types de traitement exécutés par le dispositif de traitement d'image (30), dans lequel les tampons sont utilisés afin de transférer une tâche entre des unités de traitement (31A, 31B, 32, 33) du dispositif de traitement d'image (30), pour estimer une charge sur le dispositif de traitement d'image (30) ; et
une unité de modification (12) qui, dans un cas où la charge sur le dispositif de traitement d'image est supérieure à un premier seuil, modifie un contenu de traitement actuel d'un type de traitement avec une priorité inférieure, parmi les différents types de traitement exécutés par le dispositif de traitement d'image, en un contenu de traitement avec une charge plus réduite, dans lequel le type de traitement avec une priorité inférieure est une combinaison de zones de chevauchement entre les images et dans lequel le contenu de traitement avec une charge plus réduite est un contenu de traitement pour combiner des zones entre les images avec une qualité de combinaison diminuée.

2. Système selon la revendication 1,
dans lequel
l'unité de modification modifie un contenu de traitement du traitement exécuté par le dispositif de traitement d'image en un contenu de traitement avec une charge plus élevée dans un cas où la charge sur le dispositif de traitement est inférieure à un deuxième seuil.

3. Système selon la revendication 1 ou la revendication 2,
dans lequel
le dispositif de traitement d'image exécute chacun des différents types de traitement en utilisant une GPU, et
l'unité de surveillance surveille le tampon et estime une charge sur la GPU.

4. Procédé de commande pour commander un dispositif de traitement d'image conçu pour exécuter différents types de traitement pour assembler une pluralité d'images entre elles pour synthétiser une image panoramique, le procédé de commande consistant,
par un système comprenant un appareil de commande (10) et un dispositif de traitement d'image (30),
à surveiller des tampons utilisés par chacun des différents types de traitement exécutés par le dispositif de traitement d'image, dans lequel les tampons sont utilisés afin de transférer une tâche entre des unités de traitement du dispositif de traitement d'image (30), pour estimer une charge sur le dispositif de traitement d'image ;
et
à modifier, dans un cas où la charge sur le dispositif de traitement d'image est supérieure à un premier seuil, un contenu de traitement actuel d'un type de traitement avec une priorité inférieure parmi les différents types de traitement exécutés par le dispositif de traitement en un contenu de traitement avec une charge plus réduite, dans lequel le type de traitement avec une priorité inférieure est une combinaison de zones de chevauchement entre les images et dans lequel le contenu de traitement avec une charge plus réduite est un contenu de traitement pour combiner des zones entre les images avec une qualité de combinaison diminuée.

5. Programme informatique comprenant des instructions qui, lorsqu'elles sont exécutées par un système comprenant un appareil de commande (10) et un dispositif de traitement d'image (30), amènent le système à mettre en œuvre le procédé selon la revendication 4.
